# EUROPEAN PATENT APPLICATION

(11) **EP 3 770 874 A1**
(43) Date of publication of application: **27.01.2021**
(21) Application number: 19772126.9
(22) Date of filing: 01.03.2019
(51) Int. Cl.: G07G 1/00, G07G 1/01, G07G 1/12

(54) **CUSTOMER GUIDANCE DEVICE, CASH PAYMENT SYSTEM, CUSTOMER GUIDANCE METHOD AND PROGRAM**

(30) Priority: 23.03.2018 JP 2018056673
(71) Applicant: GLORY LTD., Himeji-shi Hyogo 670-8567 (JP)
(72) Inventor: KUROTSUKA, Hirofumi, Himeji-shi, Hyogo 670-8567 (JP); NODA, Makoto, Himeji-shi, Hyogo 670-8567 (JP)
(74) Representative: SSM Sandmair
(86) International application number: PCT/JP2019/007991
(87) International publication number: WO 2019/181426

(57) **Abstract**

This customer guidance device (20) includes a code reader (530) configured to acquire a dispensing amount of money of which dispensing is requested by a customer, and a control unit (550). The control unit (550) extracts, on the basis of the dispensing amount of money acquired by the code reader (520), a cash dispensing device from which cash corresponding to the dispensing amount of money is to be dispensed, from a plurality of cash dispensing devices, and performs control for guiding the customer to the extracted cash dispensing device. For example, as the control for guiding the customer, the control unit (550) causes an operation/display unit (510) to display customer guidance information for specifying the extracted cash dispensing device.

## Description

### TECHNICAL FIELD

The present invention relates to a customer guidance device that guides a customer to a cash dispensing device from which cash corresponding to an amount of money requested by a customer is dispensed, and relates to a cash dispensing system that includes the customer guidance device and the cash dispensing device. The present invention also relates to a customer guidance method and a program.

### BACKGROUND ART

In recent years, a so-called cash-out service has been considered in order to enable a customer to easily receive cash in a supermarket, a convenience store, or the like where no automatic teller machine is installed. In the cash-out service, cash is withdrawn from a deposit account in a financial institution such as a bank, by using a cash dispensing device, such as a POS (Point of Sales) register device (a device in which a POS terminal is connected to a change machine), that is capable of dispensing change on the basis of cash settlement. For example, Patent Literature 1 describes a cash-out system capable of performing such a cash-out service.

In the cash-out system of Patent Literature 1, a customer brings a commodity tag for cash out to a POS terminal installed in a checkout counter. On the commodity tag, a barcode (or a two-dimensional code) representing an amount of money for which cash out is performed is printed. The barcode of the commodity tag is read by a barcode reader of the POS terminal. Then, for the amount of money for cash out specified by the barcode, electronic settlement such as card settlement using a debit card of the customer is performed. Upon completion of the electronic settlement, the amount of money for cash out is withdrawn from the deposit account, and cash corresponding to the amount of money withdrawn from the deposit account is dispensed from a change dispensing means of the POS terminal.

### CITATION LIST

### [PATENT LITERATURE]

[PTL 1] Japanese Patent No. 4210688

### SUMMARY OF THE INVENTION

### PROBLEMS TO BE SOLVED BY THE INVENTION

In the cash-out system described above, when a plurality of checkout counters each having installed therein a POS terminal capable of performing cash out are provided in a store, a customer brings a commodity tag for cash out to any of the checkout counters.

When the customer brings the commodity tag to the checkout counter, there may be a case where the POS terminal of the checkout counter does not have an inventory amount of cash that satisfies the amount of money for cash out. In this case, cash out cannot be performed at this checkout counter, and thus, the customer has to go to a queue for another checkout counter for performing cash out. This causes very cumbersome movement of the customer.

Therefore, an object of the present invention is to enable smooth dispensing of cash corresponding to the amount of money requested by a customer when the customer uses a cash dispensing service such as a cash-out service.

### SOLUTION TO THE PROBLEMS

A first aspect of the present invention relates to a customer guidance device configured to guide a customer to a cash dispensing device configured to dispense cash. The customer guidance device according to the present aspect includes an acquisition unit configured to acquire a dispensing amount of money of which dispensing is requested by the customer, and a control unit. Here, the control unit extracts, on the basis of the dispensing amount of money acquired by the acquisition unit, the cash dispensing device from which cash corresponding to the dispensing amount of money is to be dispensed, from cash dispensing devices, and performs control for guiding the customer to the extracted cash dispensing device.

For example, the cash dispensing device has a cash checkout function of performing cash settlement for an amount of money of cash paid by a customer and of dispensing change, and a cash-out function of dispensing cash corresponding to an amount of money withdrawn from a deposit account in a financial institution on the basis of electronic settlement for the amount of money of which dispensing is requested by a customer. The control unit extracts the cash dispensing device on the basis of an inventory amount of cash prepared in the cash dispensing device for the cash-out function, and the dispensing amount of money acquired by the acquisition unit.

According to the above configuration, the customer can be guided to a cash dispensing device that can dispense cash corresponding to the dispensing amount of money requested by the customer. Accordingly, a situation where the customer cannot have cash dispensed and has to go to another cash dispensing device is less likely to occur. In addition, dispensing of cash corresponding to the dispensing amount of money, in particular, dispensing of cash according to the cash-out service, can be smoothly performed.

The customer guidance device according to the present aspect may further include a communication unit configured to communicate with the cash dispensing device. In this case, the control unit transmits the dispensing amount of money acquired by the acquisition unit to the extracted cash dispensing device through the communication unit, so that the extracted cash dispensing device secures cash corresponding to the dispensing amount of money so as not to be used until the cash is dispensed.

According to the above configuration, in the cash dispensing device as the dispensing target, cash to be dispensed to the customer guided by the customer guidance device is secured. Therefore, a situation where the guided customer cannot receive cash from the dispensing-target cash dispensing device is less likely to occur.

In the customer guidance device according to the present aspect, the acquisition unit may acquire the dispensing amount of money by reading a code including the dispensing amount of money.

According to the above configuration, the customer need not directly input an amount of money, and thus, an error of the dispensing amount of money due to an erroneous input is less likely to occur.

In the customer guidance device according to the present aspect, the acquisition unit may acquire the dispensing amount of money by receiving an input operation of an amount of money or a denomination and a quantity thereof.

According to the above configuration, the customer can directly input a desired amount of money to the customer guidance device.

The customer guidance device according to the present aspect may further include an information output unit. In this case, as the control for guiding the customer, the control unit causes the information output unit to output specification information for specifying the extracted cash dispensing device.

According to the above configuration, the customer can understand the location of the dispensing-target cash dispensing device by confirming the specification information outputted by the information output unit, and go to the location.

In the case of the above configuration, the information output unit may further include a printing unit. In this case, the control unit causes the printing unit to output a printed medium having the specification information printed thereon.

With this configuration, the customer can find the dispensing-target cash dispensing device while moving, with the printed medium having the specification information printed thereon, on hand.

A second aspect of the present invention relates to a cash dispensing system including a plurality of cash dispensing devices each configured to dispense cash, and a customer guidance device configured to guide a customer to any of the cash dispensing devices. In the cash dispensing system according to the present aspect, the customer guidance device includes an acquisition unit configured to acquire a dispensing amount of money of which dispensing is requested by the customer, and a control unit. Here, the control unit extracts, on the basis of the dispensing amount of money acquired by the acquisition unit, the cash dispensing device from which cash corresponding to the dispensing amount of money is to be dispensed, from the cash dispensing devices, and performs control for guiding the customer to the extracted cash dispensing device.

According to the above configuration, effects similar to those of the customer guidance device according to the first aspect can be exhibited.

In the cash dispensing system according to the present aspect, each cash dispensing device may have a cash checkout function of performing cash settlement for an amount of money of cash paid by a customer and of dispensing change, and a cash-out function of performing electronic settlement for an amount of money of which dispensing is requested by a customer, and of dispensing cash corresponding to the amount of money withdrawn from a deposit account in a financial institution on the basis of the electronic settlement. The customer guidance device may further include a communication unit configured to communicate with the cash dispensing device. In this case, the control unit transmits the dispensing amount of money acquired by the acquisition unit to the extracted cash dispensing device through the communication unit, and when the cash dispensing device has received the dispensing amount of money, the cash dispensing device secures cash corresponding to the dispensing amount of money so as not to be used until the cash is dispensed.

According to the above configuration, in the dispensing-target cash dispensing device, cash to be dispensed to the customer guided by the customer guidance device is secured. Therefore, a situation where the guided customer cannot receive cash from the dispensing-target cash dispensing device is less likely to occur.

In the cash dispensing system according to the present aspect, corresponding to each of the cash dispensing devices, an announcement unit configured to announce that the cash dispensing device is the extracted cash dispensing device may be provided. In this case, as the control for guiding the customer, the control unit outputs information for causing the announcement unit corresponding to the extracted cash dispensing device to perform an announcement operation.

According to the above configuration, the customer can understand the position of the dispensing-target cash dispensing device by confirming the announcement operation by the announcement unit. In particular, when a reception number is outputted from the customer guidance device and announcement of a guidance number is performed as the announcement operation by the announcement unit, the customer can understand that the customer's turn for dispensing has come, on the basis of the announced reception number.

The cash dispensing system according to the present aspect may include: a determination unit configured to determine whether or not dispensing of cash can be performed, on the basis of an inventory amount of cash prepared in the cash dispensing device for the cash-out function; and a determination information output unit configured to output information related to a determination result by the determination unit.

According to the above configuration, the customer can confirm availability of the cash-out function in each cash dispensing device. Therefore, the customer can go to a cash dispensing device from which cash can be taken out according to the cash-out function.

A third aspect of the present invention relates to a customer guidance method for guiding a customer to a cash dispensing device configured to dispense cash. The customer guidance method according to the present aspect includes: acquiring a dispensing amount of money of which dispensing is requested by the customer; extracting, on the basis of the acquired dispensing amount of money, the cash dispensing device from which cash corresponding to the dispensing amount of money is to be dispensed, from cash dispensing devices; and performing control for guiding the customer to the extracted cash dispensing device.

According to the above method, effects similar to those of the customer guidance device according to the first aspect can be exhibited.

A program according to a fourth aspect of the present invention causes a computer, of a customer guidance device configured to guide a customer to a cash dispensing device configured to dispense cash, to execute the functions of: acquiring a dispensing amount of money of which dispensing is requested by the customer; extracting, on the basis of the acquired dispensing amount of money, the cash dispensing device from which cash corresponding to the dispensing amount of money is to be dispensed, from cash dispensing devices; and performing control for guiding the customer to the extracted cash dispensing device.

According to the above configuration, effects similar to those of the customer guidance device according to the first aspect can be exhibited.

### ADVANTAGEOUS EFFECTS OF THE INVENTION

According to the present invention, when a customer uses a cash dispensing service such as a cash-out service, dispensing of cash corresponding to an amount of money requested by the customer can be smoothly performed.

The effects and the significance of the present invention will be further clarified by the description of the embodiment below. However, the embodiment below is merely an example for implementing the present invention. The present invention is not limited to the embodiment below in any way.

### BRIEF DESCRIPTION OF THE DRAWINGS

[FIG. 1] FIG. 1 is a block diagram showing a configuration of a cash dispensing system according to an embodiment.
[FIG. 2] FIG. 2 is a perspective view showing an external configuration of a POS register device according to the embodiment.
[FIG. 3] FIG. 3 is a block diagram showing a configuration of the POS register device according to the embodiment.
[FIG. 4] FIGS. 4(a) and 4(b) respectively show examples of a cash-out inventory amount file and a securement file according to the embodiment.
[FIG. 5] FIG. 5(a) is a perspective view showing an external configuration of a customer guidance device according to the embodiment. FIG. 5(b) is a block diagram showing a configuration of the customer guidance device according to the embodiment. FIG. 5(c) shows an example of a cash-out card.
[FIG. 6] FIG. 6(a) is a flowchart showing a customer guidance process according to the embodiment. FIG. 6(b) shows an example of customer guidance information displayed on an operation/display unit, according to the embodiment. FIG. 6(c) shows an example of a receipt outputted by a printing unit, according to the embodiment.
[FIG. 7] FIG. 7 is a flowchart showing a cash securement process according to the embodiment.
[FIG. 8] FIG. 8 is a flowchart showing a cash dispensing process according to the embodiment.
[FIG. 9] FIG. 9 is a perspective view showing an external configuration of a POS register device according to Modification 1.
[FIG. 10] FIG. 10(a) is a flowchart showing a customer guidance process according to Modification 1. FIG. 10(b) shows the operation/display unit in a state where customer guidance information and a reception number are displayed, according to Modification 1. FIG. 10(c) shows an example of a receipt outputted by the printing unit, according to Modification 1.
[FIG. 11] FIG. 11 is a flowchart showing a reception number announcement process according to Modification 1.
[FIG. 12] FIG. 12 shows a display device in a state where a reception number is displayed, according to Modification 1.
[FIG. 13] FIG. 13 is a flowchart showing an availability information announcement process according to Modification 2.
[FIG. 14] FIGS. 14(a) to 14(c) each show the display device in a state where cash-out availability information is displayed, according to Modification 2.
[FIG. 15] FIG. 15(a) is a flowchart showing a customer guidance process according to Modification 3. FIG. 15(b) shows the operation/display unit in a state where a monetary amount input screen is displayed, according to Modification 3. FIG. 15(c) shows an example of a receipt outputted by the printing unit, according to Modification 3.

It is noted that the drawings are solely for description and do not limit the scope of the present invention in any way.

### BEST MODE FOR CARRYING OUT THE INVENTION

Hereinafter, an embodiment of the present invention will be described with reference to the drawings.

In the present embodiment, for convenience of description, card settlement is described as an example of electronic settlement.

In the embodiment below, an operation/display unit 510 and a printing unit 530 correspond to an "information output unit" described in the claims. A code reader 520 corresponds to an "acquisition unit" described in the claims. Furthermore, a receipt R1 corresponds to a "printed medium" described in the claims. Furthermore, a POS register device 10 corresponds to a "cash dispensing device" described in the claims.

However, the above description is only for providing correspondence between the configurations of the claims and the configurations of the embodiment. The invention described in the claims is not limited in any way by the above correspondence.

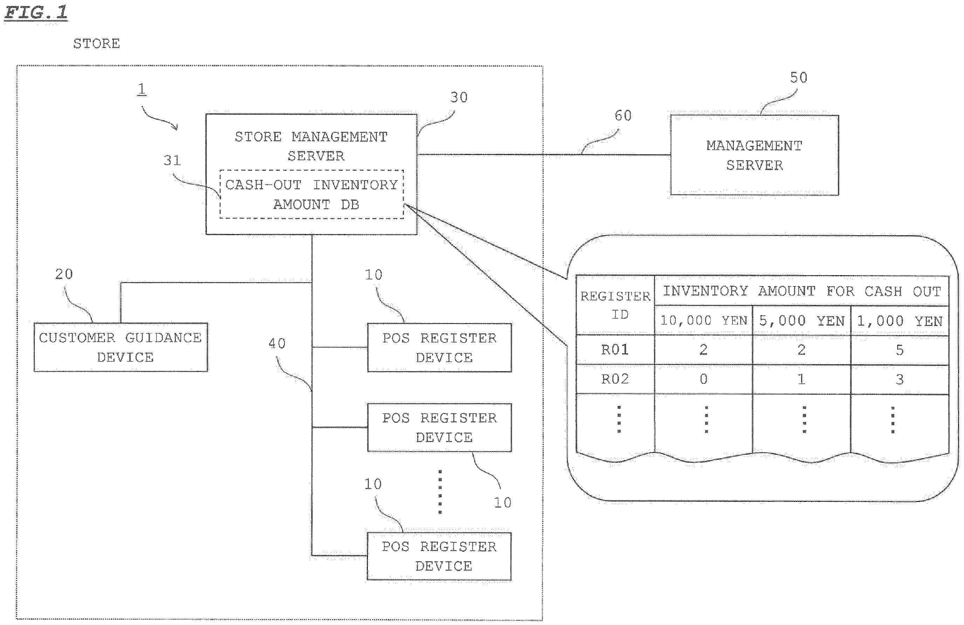

FIG. 1 is a block diagram showing a configuration of a cash dispensing system 1 according to the present embodiment.

The cash dispensing system 1 is configured in a store such as a supermarket or a convenience store, and includes a plurality of POS register devices 10, a customer guidance device 20, and a store management server 30. Each POS register device 10, the customer guidance device 20, and the store management server 30 are connected through a communication line 40 such as a LAN, and are communicable with one another via the communication line 40.

Each POS register device 10 is a device obtained by combining a POS terminal and change machine. The POS register device 10 is disposed at a checkout counter installed in the store, and is operated by a clerk. The POS register device 10 has a cash checkout function of performing cash settlement of an amount of money of cash paid as a commodity price from a customer who purchases commodities, and of dispensing change when there is any change. The POS register device 10 also has a card checkout function in which, with respect to the price of commodities purchased by a customer, card settlement using a payment card such as a credit card or a debit card is electronically performed as electronic settlement. Furthermore, the POS register device 10 has a cash-out function which is a function for a cash-out service. In the cash-out service, with respect to an amount of money of which dispensing is requested by a customer, debit settlement as card settlement using a debit card is performed, and cash corresponding to the amount of money withdrawn on the basis of the card settlement from a deposit account in a financial institution is dispensed. The customer, using the POS register device 10, can take out cash corresponding to the amount of money withdrawn from the deposit account of the customer. In the present embodiment, for the cash-out service, a cash-out card is prepared for each dispensing amount of money.

In the present embodiment, the following description is given assuming that the cash-out service is performed for dispensing of cash corresponding to 1,000 yen or more, and is not performed for dispensing of coins. Although this cash-out service is for dispensing of cash corresponding to 1,000 yen or more, a configuration may be adopted in which dispensing of coins is performed, or a configuration may be adopted in which dispensing of cash less than 1,000 yen is performed. When the cash-out service is performed for dispensing cash of 1,000 or more, cash-out cards corresponding to the amounts of money of 10,000 yen, 5,000 yen, and 1,000 can be prepared, for example.

In the store, the customer guidance device 20 is disposed near a display shelf on which the cash-out cards are placed. The customer guidance device 20 has a customer guidance function of guiding a customer to a POS register device 10 from which cash according to the cash-out service is to be dispensed.

The store management server 30 performs management of the inventory amounts of the plurality of POS register devices 10, management of the proceeds from sales of the store, management of the commodity inventory, and the like. The store management server 30 is connected by a communication line 60 such as an internet VPN to a management server 50 disposed in a financial institution such as a bank. The store management server 30 is communicable with the management server 50 via the communication line 60.

The store management server 30 has a cash-out inventory amount database 31 (hereinafter referred to as "cash-out inventory amount DB 31") for managing the inventory amount of each kind of cash stored in each POS register device 10 and prepared for cash out. The inventory amount of cash for cash out is the amount of money of cash that is prepared in the POS register device 10 and that can be used for the cash-out service, and is represented by the quantity for each denomination. For the POS register device 10, an inventory amount of cash for change that should be secured for change, i.e., a quantity for each denomination, is determined in advance. Therefore, the amount obtained by subtracting the inventory amount of cash for change from the entire inventory amount of cash of the POS register device 10 is the inventory amount of cash for cash out. When the entire inventory amount of cash becomes equal to or less than the inventory amount for change, the inventory amount of cash for cash out becomes zero. Since 10,000-yen notes do not serve as change, all 10,000-yen notes can be used for the cash-out service. In the present embodiment, the number of banknotes for each of denominations of 10,000 yen, 5,000 yen, and 1,000 yen is stored in the cash-out inventory amount DB 31, as the inventory amount of cash for cash out (see FIG. 1). Each of the plurality of POS register devices 10 is provided with a register ID (Identification) which is an identification symbol for identifying the POS register device 10. In the cash-out inventory amount DB 31, an inventory amount of cash for cash out in each POS register device 10 is stored in association with the register ID provided to the POS register device 10.

When the management server 50 has received, through the store management server 30, a request for card settlement of a purchase amount of money of commodities or a dispensing amount of money according to the cash-out service, the management server 50 performs card settlement as electronic settlement, with respect to the requested amount of money. The amount of money for which the card settlement has been performed is withdrawn from the deposit account of the customer who takes out the cash corresponding to the amount of money.

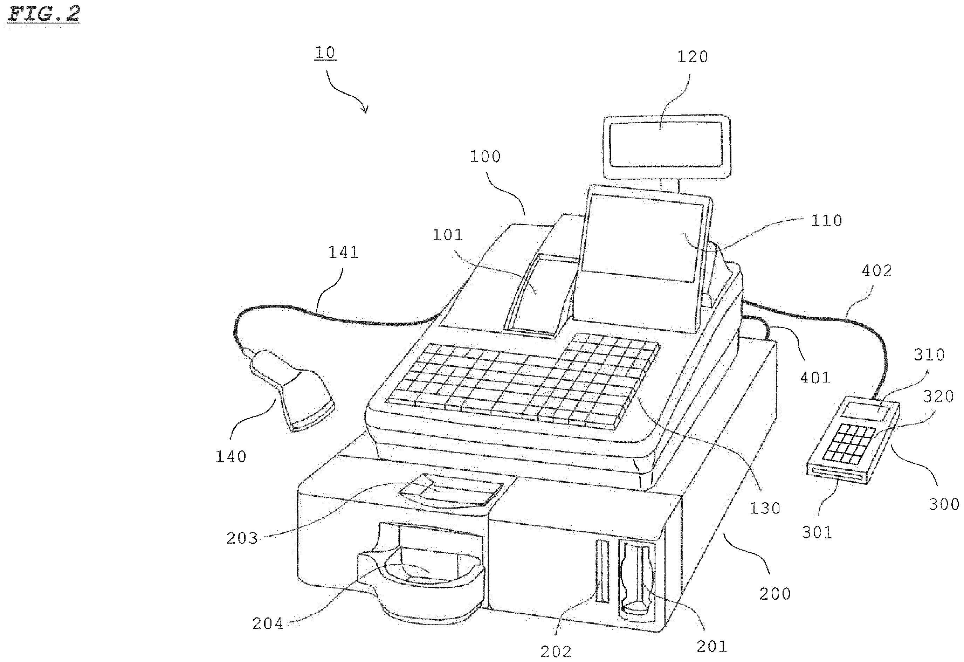

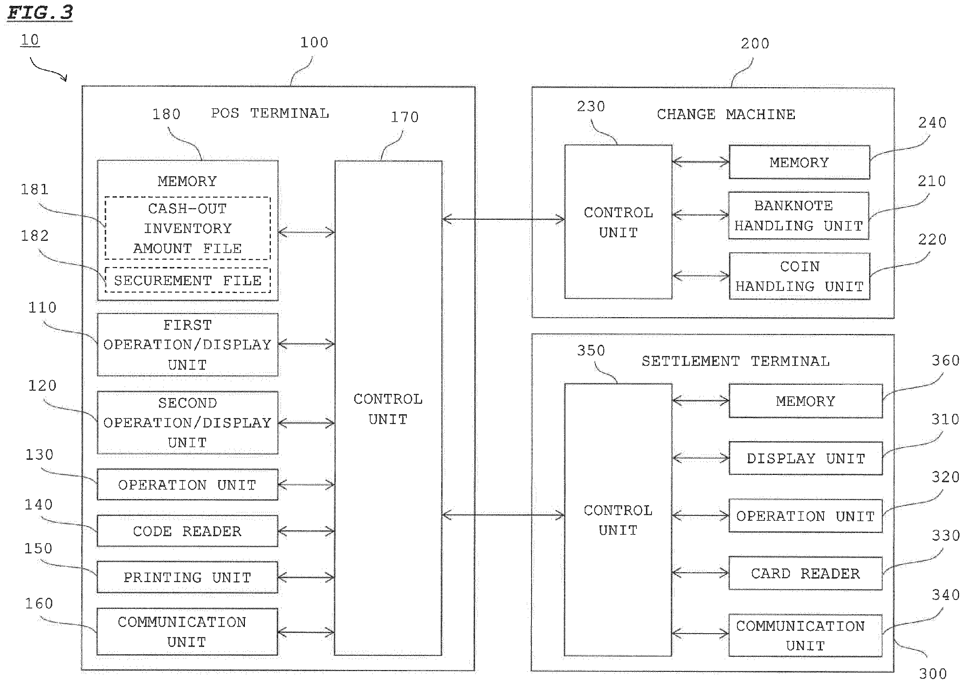

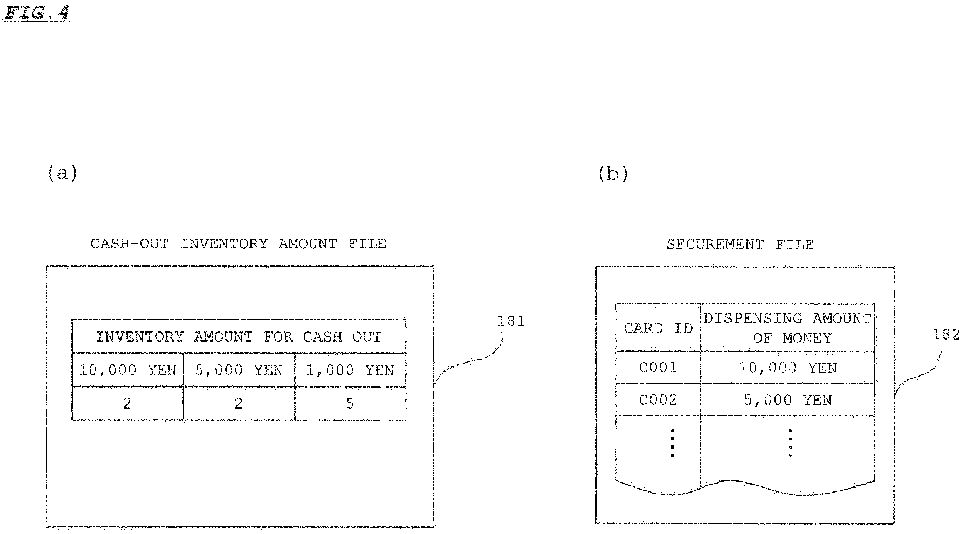

FIG. 2 is a perspective view showing an external configuration of the POS register device 10 according to the present embodiment. FIG. 3 is a block diagram showing a configuration of the POS register device 10 according to the present embodiment. FIGS. 4(a) and 4(b) respectively show examples of a cash-out inventory amount file 181 and a securement file 182 according to the present embodiment.

The POS register device 10 includes a POS terminal 100, a change machine 200, and a settlement terminal 300. The POS terminal 100 is installed on the change machine 200. The change machine 200 is connected to the POS terminal 100 by a communication cable 401 and the settlement terminal 300 is connected to the POS terminal 100 by a communication cable 402. The POS terminal 100 and the change machine 200 may be located so as to be separated from each other.

The POS terminal 100 collects information of the commodity name, price, and the like of commodities purchased by the customer, and calculates the total amount of money. The POS terminal 100 also calculates an amount of change from the total amount of money and the amount of payment received by the change machine 200 from the customer, and notifies the change machine 200 if there is any amount of change. In addition, the POS terminal 100 sends commodity sales information to the store management server 30.

The POS terminal 100 includes a first operation/display unit 110, a second operation/display unit 120, an operation unit 130, a code reader 140, a printing unit 150, a communication unit 160, a control unit 170, and a memory 180. In the POS terminal 100, the operation unit 130 is provided on the upper surface of the POS terminal 100, and the first operation/display unit 110 and the second operation/display unit 120 are provided to the rear of the operation unit 130 on the upper surface. The first operation/display unit 110 is for a clerk who is an operator of the POS terminal 100, and is oriented to the front while being oriented slightly diagonally upward. The second operation/display unit 120 is for a customer and is oriented to a direction in which a customer passing through the checkout counter can easily view the second operation/display unit 120. In addition, in the POS terminal 100, a discharge port 101 for a receipt is provided, adjacent to the first operation/display unit 110.

Each of the first operation/display unit 110 and the second operation/display unit 120 is implemented as a touch panel composed of a display and a touch sensor, displays various kinds of information on the display, and detects, by means of the touch sensor, a touch operation performed onto the display by an operator (clerk or customer). The operation unit 130 includes a large number of keys, and receives a key operation performed by the operator.

The code reader 140 is connected to the body of the POS terminal 100 by a signal cable 141, and reads a barcode attached to a commodity, to acquire information such as the name, price, and the like of the commodity. The code reader 140 reads a code such as a barcode provided to a cash-out card, to acquire information such as a dispensing amount of money.

The printing unit 150 outputs, from the discharge port 101, a receipt having the content of transaction printed thereon. The communication unit 160 performs information communication through the communication line 40 between a communication unit 540 of the customer guidance device 20 and a communication unit (not shown) of the store management server 30.

The memory 180 includes a ROM (Read Only Memory), a RAM (Random Access Memory), and the like, stores an operation program for the control unit 170, and is used as a work area when the control unit 170 performs a control process. The operation program includes a program for causing the control unit 170, which is a computer, to execute a cash securement process and a cash dispensing process described later.

The control unit 170 includes an arithmetic circuit such as a CPU (Central Processing Unit), and controls the POS terminal 100 by controlling the respective components (the first operation/display unit 110, the second operation/display unit 120, the operation unit 130, the code reader 140, the printing unit 150, the communication unit 160, and the like) of the POS terminal 100, in accordance with the operation program stored in the memory 180.

The memory 180 includes the cash-out inventory amount file 181 and the securement file 182. As shown in FIG. 4(a), inventory amounts of cash for cash out are stored in the cash-out inventory amount file 181. In the present embodiment, the number of banknotes for each of denominations of 10,000 yen, 5,000 yen, and 1,000 yen is stored as the inventory amount of cash for cash out in the cash-out inventory amount file 181.

The POS register device 10 has a function of, upon a request from the customer guidance device 20, securing, without dispensing as change or the like, cash corresponding to a dispensing amount of money read from a cash-out card by the customer guidance device 20, until cash corresponding to the dispensing amount of money is dispensed from the POS register device 10. As shown in FIG. 4(b), a dispensing amount of money to be secured by the POS register device 10 is stored in the securement file 182, in association with a card ID of a cash-out card for dispensing the dispensing amount of money. The card ID is a card identification symbol for identifying the cash-out card.

The change machine 200 stores cash paid by a customer, notifies the POS terminal 100 of the amount of payment, and, when having received a notification of an amount of change from the POS terminal 100, automatically dispenses cash corresponding to the amount of change. Furthermore, the change machine 200 performs dispensing of cash according to the cash-out service, i.e., performs cash out.

The change machine 200 includes a banknote handling unit 210, a coin handling unit 220, a control unit 230, and a memory 240. The change machine 200 is provided, at the front thereof, with a banknote inlet 201, a banknote outlet 202, a coin inlet 203, and a coin outlet 204.

The banknote handling unit 210 includes a recognition unit (not shown) for recognizing the denomination of each banknote, a banknote storage unit (not shown) in which banknotes are stored for each denomination, and a transport unit (not shown) by which banknotes are transported. In the banknote handling unit 210, when a banknote is deposited to the change machine 200, the banknote inserted in the banknote inlet 201 is transported by the transport unit to be stored in the banknote storage unit, and when a banknote is dispensed from the change machine 200, the banknote discharged from the banknote storage unit is transported by the transport unit to be dispensed to the banknote outlet 202.

The coin handling unit 220 includes a recognition unit (not shown) for recognizing the denomination of each coin, a coin storage unit (not shown) in which coins are stored for each denomination, and a transport unit (not shown) by which coins are transported. In the coin handling unit 220, when a coin is deposited to the change machine 200, the coin put into the coin inlet 203 is transported by the transport unit to be stored in the coin storage unit, and when a coin is dispensed from the change machine 200, the coin discharged from the coin storage unit is transported by the transport unit to be dispensed to the coin outlet 204.

The memory 240 includes a ROM (Read Only Memory), a RAM (Random Access Memory), and the like, stores an operation program for the control unit 230, and is used as a work area when the control unit 230 performs a control process.

The control unit 230 includes an arithmetic circuit such as a CPU (Central Processing Unit), and controls the change machine 200 by controlling the respective components (the banknote handling unit 210, the coin handling unit 220, and the like) of the change machine 200, in accordance with the operation program stored in the memory 240. The control unit 230 can communicate with the control unit 170 of the POS terminal 100 through the communication cable 401.

The settlement terminal 300 is used for card settlement using a payment card. The settlement terminal 300 includes a display unit 310, an operation unit 320, a card reader 330, a communication unit 340, a control unit 350, and a memory 360. A payment card is inserted from a card insertion port 301 into the settlement terminal 300.

The display unit 310 is a liquid crystal display, for example, and displays various kinds of information related to card settlement. The operation unit 320 is implemented as a numeric keypad, and receives an input operation of a PIN code or the like which is a personal identification number. The card reader 330 reads information of a card ID, which is a card identification symbol for identifying a card, from a payment card inserted into the card insertion port 301. The communication unit 340 performs wireless information communication with the communication unit (not shown) of the store management server 30.

The memory 360 includes a ROM (Read Only Memory), a RAM (Random Access Memory), and the like, stores an operation program for the control unit 350, and is used as a work area when the control unit 350 performs a control process.

The control unit 350 includes an arithmetic circuit such as a CPU (Central Processing Unit), and controls the settlement terminal 300 by controlling the respective components (the display unit 310, the operation unit 320, the card reader 330, the communication unit 340, and the like) of the settlement terminal 300, in accordance with the operation program stored in the memory 360. The control unit 350 can communicate with the control unit 170 of the POS terminal 100 through the communication cable 402.

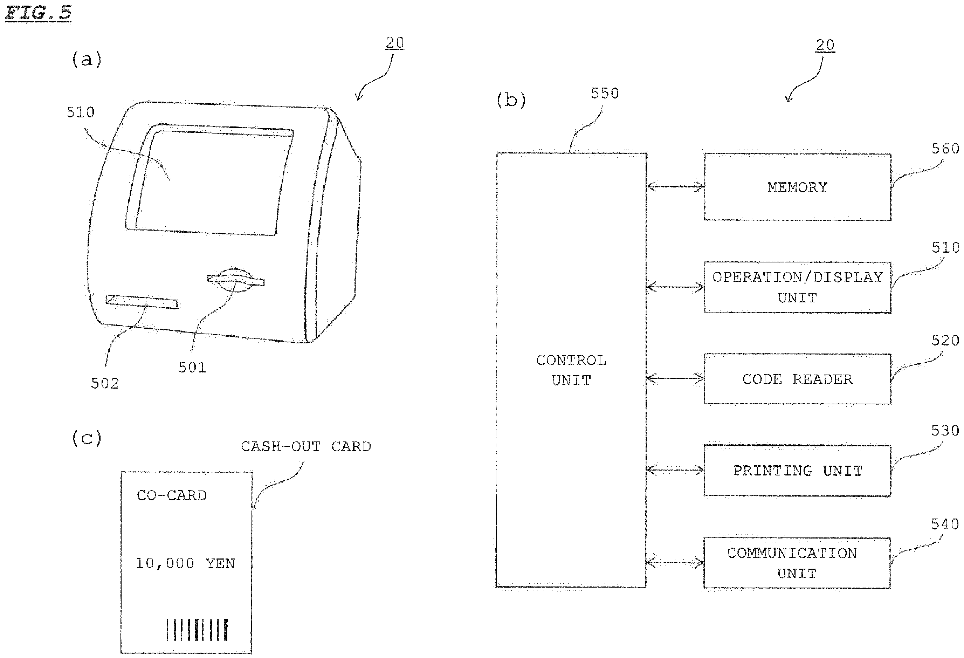

FIG. 5(a) is a perspective view showing an external configuration of the customer guidance device 20 according to the present embodiment. FIG. 5(b) is a block diagram showing a configuration of the customer guidance device 20 according to the present embodiment. FIG. 5(c) shows an example of a cash-out card.

The customer guidance device 20 includes the operation/display unit 510, the code reader 520, the printing unit 530, the communication unit 540, a control unit 550, and a memory 560.

The operation/display unit 510 is disposed at the front of the customer guidance device 20. A card insertion port 501 and a receipt discharge port 502 are provided at the front of the customer guidance device 20. A cash-out card is inserted into the card insertion port 501.

As shown in FIG. 5(c), a cash-out card indicates a dispensing amount of money to be dispensed by using this card. In addition, the cash-out card is provided with a barcode. The barcode includes a dispensing amount of money and a card ID for identifying the cash-out card. The code provided to the cash-out card may not necessarily be a barcode, and may be another code, for example, two-dimensional code.

The operation/display unit 510 is implemented as a touch panel composed of a display and a touch sensor, displays various kinds of information on the display, and detects, by means of the touch sensor, a touch operation performed onto the display by an operator such as a customer. The code reader 520 reads the barcode provided to the cash-out card inserted into the card insertion port 501, to acquire information such as a dispensing amount of money and a card ID.

The printing unit 530 outputs, from the receipt discharge port 502, a receipt having customer guidance information printed thereon. The communication unit 540 performs information communication through the communication line 40 with the communication unit 160 of the POS register device 10 and the communication unit (not shown) of the store management server 30.

The memory 560 includes a ROM (Read Only Memory), a RAM (Random Access Memory), and the like, stores an operation program for the control unit 550, and is used as a work area when the control unit 550 performs a control process. The operation program includes a program for causing the control unit 550, which is a computer, to execute a customer guidance process described later.

The control unit 550 includes an arithmetic circuit such as a CPU (Central Processing Unit), and controls the customer guidance device 20 by controlling the respective components (the operation/display unit 510, the code reader 520, the printing unit 530, the communication unit 540, and the like) of the customer guidance device 20, in accordance with the operation program stored in the memory 560.

Next, the customer guidance function of the customer guidance device 20 is described. For the customer guidance function, a customer guidance process is executed by the control unit 550.

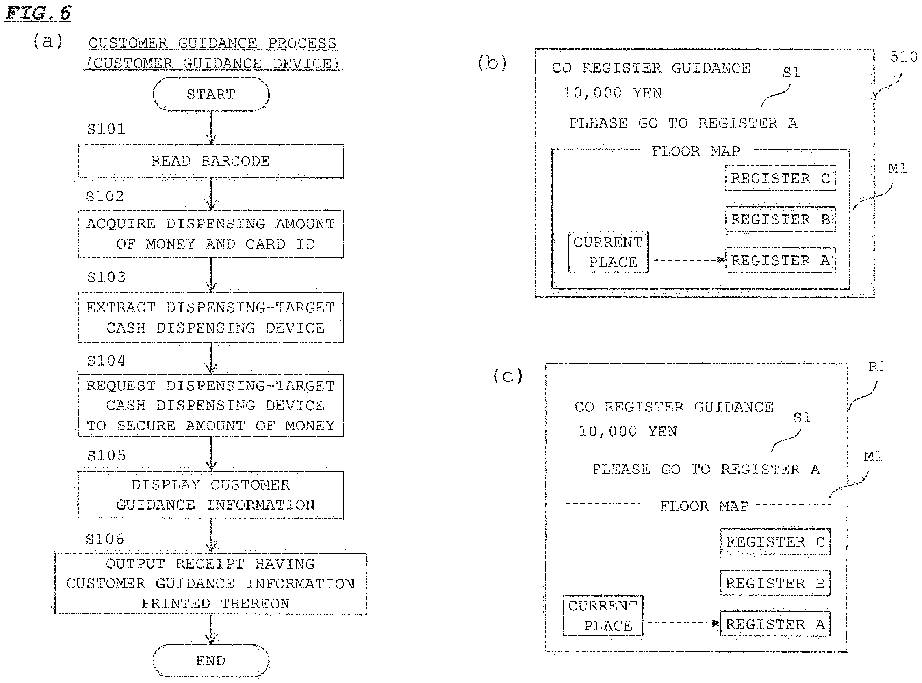

FIG. 6(a) is a flowchart showing the customer guidance process according to the present embodiment. FIG. 6(b) shows an example of customer guidance information displayed on the operation/display unit 510, according to the present embodiment. FIG. 6(c) shows an example of a receipt R1 outputted by the printing unit 530, according to the present embodiment.

A customer selects a cash-out card indicating a dispensing amount of money of which dispensing is requested by the customer, from a plurality of cash-out cards placed on a display shelf. At this time, when the dispensing amount of money requested by the customer cannot be satisfied by a single cash-out card, a plurality of cash-out cards are selected so that the total amount of money becomes the requested dispensing amount of money. The customer brings the selected cash-out card to the customer guidance device 20, and inserts the cash-out card into the card insertion port 501.

The control unit 550 causes the code reader 520 to read the barcode provided to the cash-out card (S101). Accordingly, the code reader 520 acquires a dispensing amount of money and a card ID included in the barcode. The control unit 550 acquires the dispensing amount of money and the card ID from the code reader 520 (S102). When there are a plurality of cash-out cards, the barcode of each cash-out card inserted into the card insertion port 501 is sequentially read by the code reader 520. Accordingly, with respect to all of the cash-out cards, the control unit 550 acquires a dispensing amount of money and a card ID. In this case, the dispensing amount of money acquired by the control unit 550 is the total dispensing amount of money of all of the cash-out cards. At the time of the acquisition by the code reader 520, the dispensing amount of money and the card ID are in the form of codes representing these. When these codes are acquired by the control unit 550, these codes are converted into the corresponding dispensing amount of money and card ID, by using conversion data (conversion table).

Next, on the basis of the acquired dispensing amount of money, the control unit 550 extracts a POS register device 10 from which cash corresponding to the dispensing amount of money is to be dispensed, from a plurality of POS register devices 10 installed in the store (S103).

That is, the control unit 550 accesses the cash-out inventory amount DB 31 of the store management server 30 through the communication unit 540. Then, the control unit 550 compares the dispensing amount of money with the inventory amount of cash for cash out of each POS register device 10, to determine whether or not the POS register device 10 can dispense cash corresponding to the dispensing amount of money. For example, when the dispensing amount of money is 10,000 yen, if the POS register device 10 has, as the inventory amount of cash for cash out, one or more 10,000-yen notes, or 10,000 yen or more in terms of 5,000 yen notes and 1,000 yen notes in total, it is determined that the POS register device 10 can dispense cash corresponding to the dispensing amount of money. When there is one POS register device 10 that can perform dispensing, the control unit 550 extracts the POS register device 10 as a dispensing target. Meanwhile, when there are a plurality of POS register devices 10 that can perform dispensing, the control unit 550 determines a POS register device 10 to be extracted, on the basis of a predetermined priority. For example, when the priority is based on the shortness of the distance from the customer guidance device 20 to a POS register device 10, a POS register device 10 that is nearest to the customer guidance device 20 is extracted as a dispensing target, from a plurality of POS register devices 10 that can perform dispensing. Alternatively, when the priority is based on the largeness of the inventory amount of cash for cash out, a POS register device 10 that has the largest inventory amount of cash for cash out is extracted as a dispensing target, from a plurality of POS register devices 10 that can perform dispensing. Other than these, for example, when the priority is based on the smallness of the number of customers waiting in a queue for a checkout counter where a POS register device 10 is placed, a POS register device 10 that has the smallest number of customers waiting in a queue is extracted as a dispensing target, from a plurality of POS register devices 10 that can perform dispensing. In this case, if a camera that captures an image of customers waiting in a queue for a checkout counter is provided, and the customers are recognized from the image captured by the camera, the number of customers waiting in a queue can be detected.

Next, the control unit 550 requests the dispensing-target POS register device 10 to secure cash corresponding to the dispensing amount of money (S104). That is, the control unit 550 transmits a request signal including the dispensing amount of money and the card ID, to the dispensing-target POS register device 10 through the communication unit 540. Here, to "secure cash corresponding to the dispensing amount of money" means that cash corresponding to the dispensing amount of money read from the cash out card by the customer guidance device 20 is caused to remain in the dispensing-target POS register device 10, without being dispensed as change or dispensed as cash according to the cash-out service to a different customer, in the POS register device 10. When there are a plurality of cash-out cards, the dispensing amounts of money and the card IDs of the plurality of cash-out cards are included in the request signal.

Next, as the customer guidance information, the control unit 550 causes the operation/display unit 510 to display a message S1 that urges the customer to go to the checkout counter where the dispensing-target POS register device 10 is placed, and a floor map M1 that indicates the location of the checkout counter, as shown in FIG. 6(b) (S105). Furthermore, the control unit 550 causes the printing unit 530 to print a receipt R1 having the customer guidance information (message S1, floor map M1) printed thereon, as shown in FIG. 6(c) (S106). As the customer guidance information (specification information), another type of specification information that can specify the dispensing-target POS register device 10, such as the number of the checkout counter where the dispensing-target POS register device 10 is placed, may be used.

The customer refers to the customer guidance information displayed on the operation/display unit 510 and the receipt R1, and goes to the checkout counter where the designated POS register device 10 is placed.

Although not shown in the flowchart in FIG. 6(a), in S103, when there is no POS register device 10 that can perform dispensing and no dispensing-target POS register device 10 has been able to be extracted, the control unit 550 notifies, through screen display or the like on the operation/display unit 510, that no POS register device 10 can dispense cash at present. The control unit 550 may make a notification indicating that cash dispensing cannot be performed, to mobile phones for business use carried by staff members in the store. Alternatively, the customer guidance device 20 may be provided with a rotary indication light, and the control unit 550 may cause the rotary indication light to operate, thereby notifying staff members in the store that cash dispensing cannot be performed.

Meanwhile, in the POS register device 10, in order to allow the customer guided by the customer guidance device 20 to receive cash according to the cash-out service, the control unit 170 executes a cash securement process for securing, in the POS register device 10, cash corresponding to the requested dispensing amount of money until reception thereof by the customer.

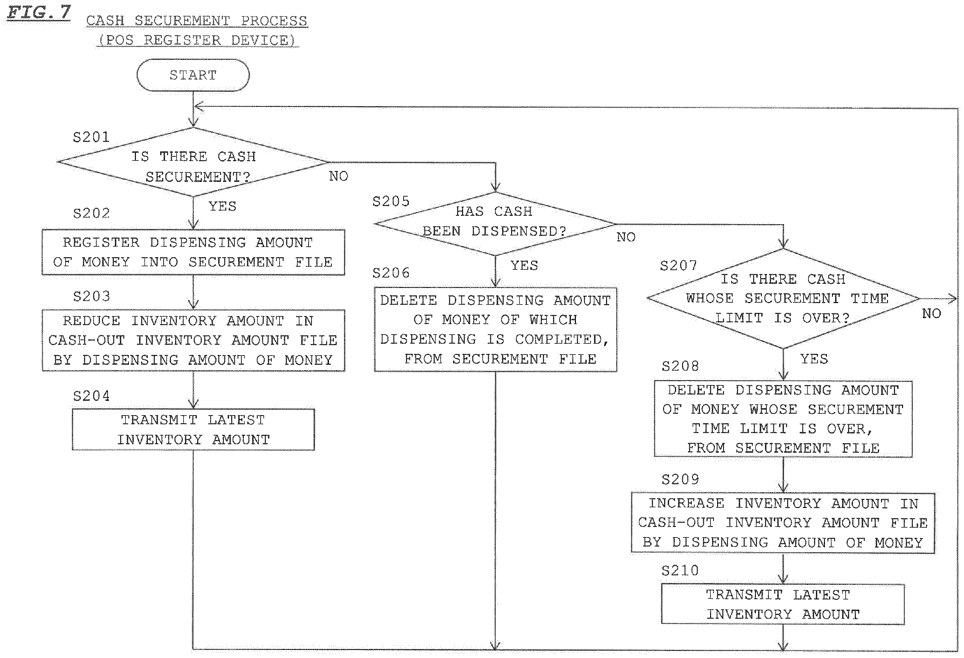

FIG. 7 is a flowchart showing the cash securement process according to the present embodiment.

The control unit 170 monitors whether or not there is a request for cash securement from the customer guidance device 20 (S201). When there is a request for cash securement (S201: YES), i.e., when the control unit 170 has received a request signal, the control unit 170 registers the dispensing amount of money included in the request signal, together with the card ID associated with the dispensing amount of money, into the securement file 182 (S202). Furthermore, the control unit 170 reduces the inventory amount of cash stored in the cash-out inventory amount file 181, by the dispensing amount of money registered in the securement file 182 (S203). For example, when the dispensing amount of money is 10,000 yen, the number of banknotes of the denomination of 10,000 yen stored in the cash-out inventory amount file 181 is reduced by one. Then, the control unit 170 transmits the latest inventory amount of cash stored in the cash-out inventory amount file 181, to the store management server 30 through the communication unit 160 (S204). The inventory amount of cash stored in the cash-out inventory amount DB 31 is updated in the store management server 30. In the cash-out inventory amount DB 31, the inventory amount corresponding to the secured dispensing amount of money is reduced. Accordingly, cash corresponding to the secured dispensing amount of money is prevented from being used for payment of cash to a different customer, and is secured until being dispensed to the corresponding customer.

Furthermore, the control unit 170 monitors whether or not cash corresponding to the secured dispensing amount of money has been dispensed (S205). When cash corresponding to the secured dispensing amount of money has been dispensed (S205: YES), the control unit 170 deletes, from the securement file 182, the dispensing amount of money of which dispensing has been completed, together with the card ID (S206).

Furthermore, with respect to cash corresponding to the secured dispensing amount of money, the control unit 170 monitors whether or not there is cash whose securement time limit is over, i.e., cash that has not been dispensed after a predetermined time limit (for example, one hour) from the securement (S207). When the customer having used the customer guidance device 20 has canceled taking out cash by the POS register device 10, cash whose securement time limit is over could be caused. When there is cash whose securement time limit is over (S207: YES), the control unit 170 deletes the dispensing amount of money of the cash together with the card ID, from the securement file 182 (S208). Furthermore, the control unit 170 increases the inventory amount of cash stored in the cash-out inventory amount file 181, by the dispensing amount of money deleted from the securement file 182 (S209). Then, the control unit 170 transmits the latest inventory amount of cash stored in the cash-out inventory amount file 181, to the store management server 30 through the communication unit 160 (S210). In the store management server 30, the inventory amount of cash stored in the cash-out inventory amount DB 31 is updated. In the cash-out inventory amount DB 31, the inventory amount of cash corresponding to the dispensing amount of money of which securement has been canceled is increased. Accordingly, cash corresponding to the dispensing amount of money of which securement has been canceled can be used for dispensing cash for a different customer.

When a customer brings one or a plurality of cash out cards to the dispensing-target POS register device 10, dispensing of cash using the cash out cards, i.e., dispensing of cash according to the cash-out service, is performed in the POS register device 10. It is noted that a customer who has not used the customer guidance device 20 may bring a cash out card to the POS register device 10.

In the POS register device 10, for the cash-out function, a cash dispensing process is executed by the control unit 170 of the POS terminal 100.

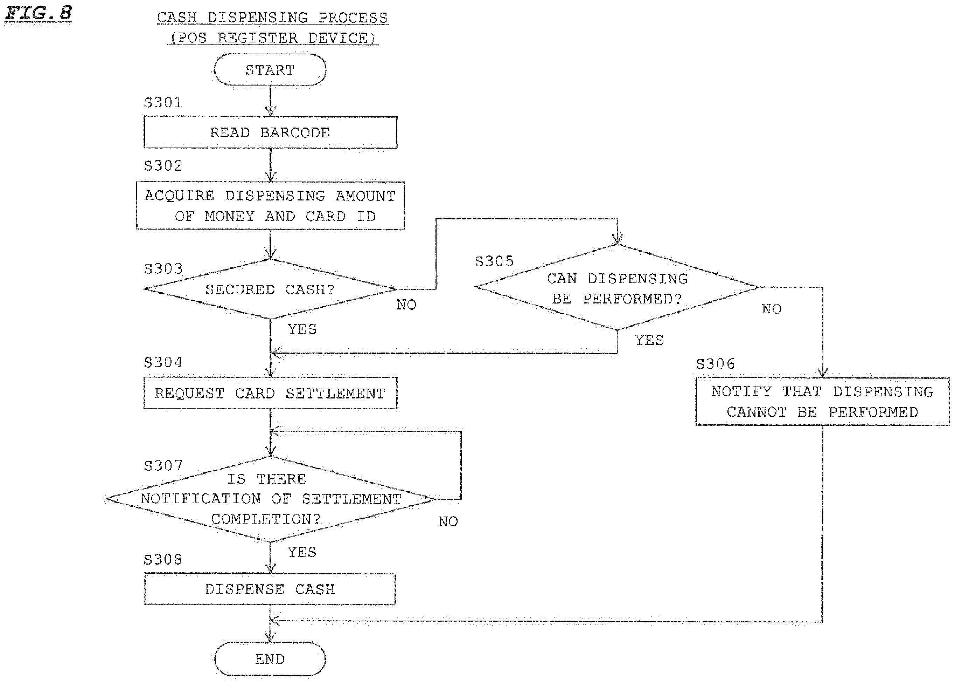

FIG. 8 is a flowchart showing the cash dispensing process according to the present embodiment.

Upon receiving a cash-out card from a customer, a clerk operating the POS register device 10 places a reading window of the code reader 140 at the barcode provided to the cash-out card. The control unit 170 causes the code reader 140 to read the barcode (S301). Accordingly, the code reader 140 acquires a dispensing amount of money and a card ID included in the barcode. The control unit 170 acquires the dispensing amount of money and the card ID from the code reader 140 (S302). When there are a plurality of cash-out cards, reading of the barcode of each cash-out card is sequentially performed.

The control unit 170 determines whether or not cash to be dispensed this time is secured cash for which a corresponding dispensing amount of money has been secured (S303). When the acquired dispensing amount of money and card ID have been registered in the securement file 182, the control unit 170 determines that the cash to be dispensed is secured cash. When the cash to be dispensed is secured cash (S303: YES), the control unit 170 notifies the settlement terminal 300 of the dispensing amount of money (when there are a plurality of cash-out cards, the total dispensing amount of money), to request card settlement (S304). Meanwhile, when cash to be dispensed is not secured cash (S303: NO), the control unit 170 compares the dispensing amount of money this time with the inventory amount of cash stored in the cash-out inventory amount file 181, and determines whether or not dispensing can be performed (S305). When dispensing can be performed (S305: YES), the control unit 170 notifies the settlement terminal 300 of the dispensing amount of money, to request card settlement (S304). When dispensing cannot be performed (S305: NO), the control unit 170 makes a notification that dispensing cannot be performed, through screen display or the like on the first operation/display unit 110 (S306).

In the settlement terminal 300 having received the request for card settlement, a debit card of the customer is inserted into the card insertion port 301, and the card ID is read by the card reader 330. In addition, a PIN code is inputted through the operation unit 320. The control unit 350 transmits the dispensing amount of money to be subjected to card settlement, together with the card ID and PIN code of the debit card, to the store management server 30 through the communication unit 340. The store management server 30 transmits the dispensing amount of money, card ID, and PIN code, to the management server 50. Then, when having received a reply indicating completion of card settlement from the management server 50, the store management server 30 transmits a notification indicating the settlement completion, to the settlement terminal 300. The control unit 350 notifies the control unit 170 of the POS terminal 100, of the settlement completion.

When having received the notification of the settlement completion from the settlement terminal 300 (S307: YES), the control unit 170 determines that the dispensing has been permitted by the card settlement, and performs dispensing of cash corresponding to the dispensing amount of money (S308). That is, the control unit 170 requests the control unit 230 of the change machine 200 to dispense cash, whereby cash corresponding to the dispensing amount of money is dispensed from the change machine 200.

Accordingly, the customer can receive cash corresponding to the dispensing amount of money requested by the customer, from the POS register device 10 of the checkout counter.

When the customer takes out cash and purchases commodities, checkout of the commodities is also performed simultaneously in the POS register device 10. In this case, card settlement of the purchase price of the commodities is also performed simultaneously with the card settlement of the dispensing amount of money, and in the financial institution, the total amount of money of the dispensing amount of money and the purchase price of the commodities is withdrawn from the deposit account of the customer. When the customer wishes, a clerk may perform a predetermined operation on the POS register device 10 (the POS terminal 100), so that cash corresponding to an amount of money obtained by subtracting the purchase price of the commodities from the dispensing amount of money is dispensed from the POS register device 10 (the change machine 200).

### <Effects of embodiment>

According to the present embodiment, the following effects can be exhibited.

A customer can be guided to a POS register device 10 that can dispense cash corresponding to the dispensing amount of money requested by the customer. Accordingly, a situation where the customer cannot have cash dispensed and has to go to another POS register device 10 is less likely to occur, and dispensing of cash according to the cash-out service can be smoothly performed.

In the dispensing-target POS register device 10, cash corresponding to the amount of money to be dispensed to the customer guided by the customer guidance device 20 is secured without being dispensed as change or the like. Therefore, a situation where the guided customer cannot receive cash from the dispensing-target POS register device 10 is less likely to occur.

Furthermore, since the dispensing amount of money requested by the customer is acquired by reading the barcode provided to the cash-out card, the customer need not directly input an amount of money, and thus, an error of the dispensing amount of money due to an erroneous input is less likely to occur.

Furthermore, the customer guidance information is displayed on the operation/display unit 510 and the receipt R1. Therefore, the customer can understand the location of the dispensing-target POS register device 10 by confirming the displayed customer guidance information, and go to the location.

Furthermore, since the receipt R1 having the customer guidance information printed thereon is outputted from the customer guidance device 20, the customer can find the dispensing-target POS register device 10 while moving with the receipt R1 on hand.

Although an embodiment of the present invention has been described, the present invention is not limited by the above embodiment in any way. Other than the matters described above, various modifications can be made to the embodiment of the present invention as indicated below.

### <Modification 1>

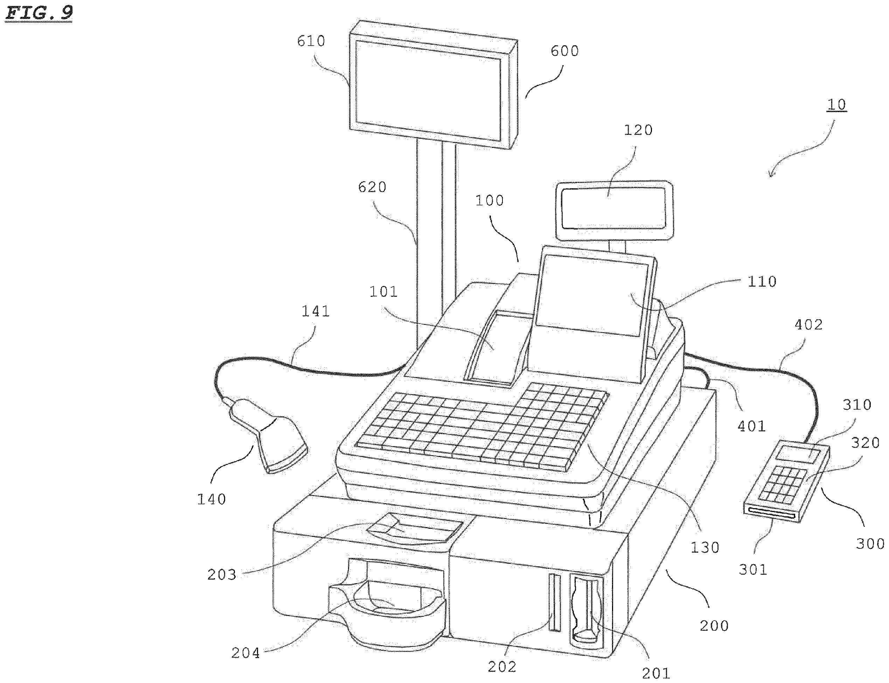

FIG. 9 is a perspective view showing an external configuration of the POS register device 10 according to Modification 1.

In the present modification, the POS register device 10 is provided with a display device 600. The display device 600 includes a display unit 610 such as a liquid crystal display, and a post 620 supporting the display unit 610. The display unit 610 is controlled by the control unit 170 of the POS terminal 100. The display unit 610 is supported by the post 620 at a height position where the display unit 610 can be easily seen by customers from positions away from the checkout counter in the store. It is noted that the display unit 610 corresponds to an "announcement unit" described in the claims.

In the present modification, the customer guidance device 20 also functions as a reception device, receives a sequential order for cash dispensing based on a cash-out card, and issues a reception number. The dispensing-target POS register device 10 receives the reception number from the customer guidance device 20, and displays the reception number when the corresponding customer's turn for dispensing has come, on the display unit 610 of the display device 600.

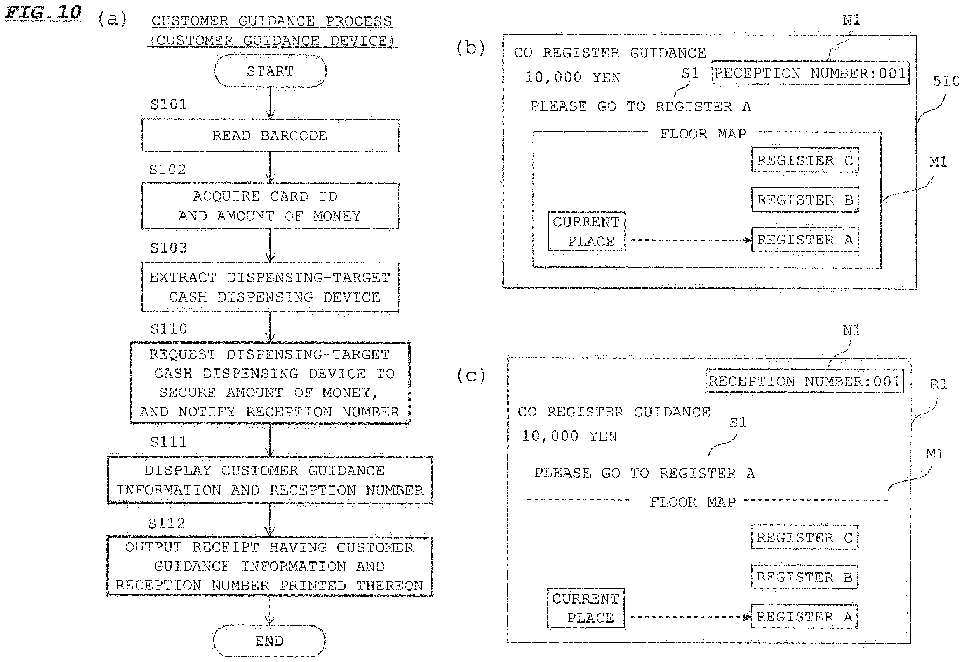

FIG. 10(a) is a flowchart showing a customer guidance process according to Modification 1. FIG. 10(b) shows the operation/display unit 510 in a state where customer guidance information and a reception number are displayed, according to Modification 1. FIG. 10(c) shows an example of a receipt R1 outputted by the printing unit 530, according to Modification 1. In the customer guidance process of the present modification shown in FIG. 10(a), the processes of S104 to S106 of the customer guidance process of the above embodiment shown in FIG. 6(a) are replaced by the processes of S110 to S112.

In the present modification, when a dispensing-target POS register device 10 has been extracted (S103), the control unit 550 requests the dispensing-target POS register device 10 to secure cash corresponding to the dispensing amount of money, creates a reception number for the cash-out card received this time, and notifies the dispensing-target POS register device 10 of the reception number (S110). In addition, as shown in FIG. 10(b), the control unit 550 causes the operation/display unit 510 to display a reception number N1 together with a message S1 and a floor map M1 which are customer guidance information (S111). Furthermore, as shown in FIG. 6(c), the control unit 550 causes the printing unit 530 to print a receipt R1 having the customer guidance information (message S1, floor map M1) and the reception number N1 printed thereon (S112).

In the POS register device 10, a reception number announcement process is executed by the control unit 170.

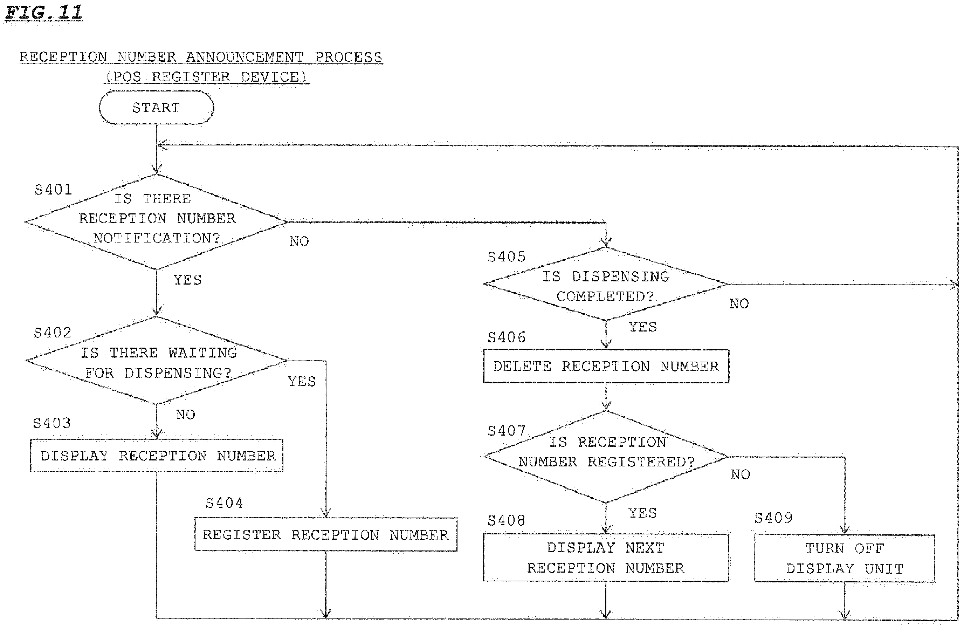

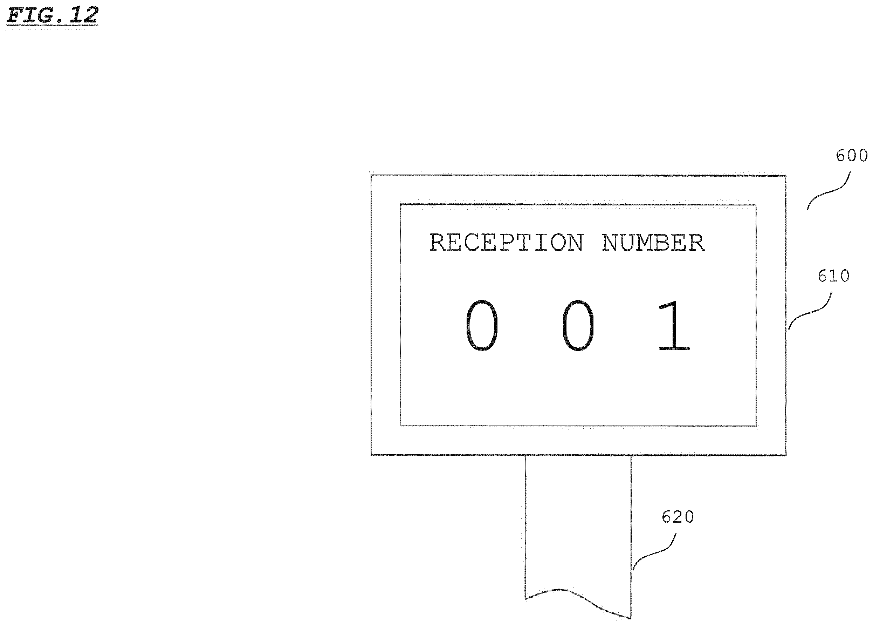

FIG. 11 is a flowchart showing the reception number announcement process according to Modification 1. FIG. 12 shows the display device 600 in a state where a reception number is displayed, according to Modification 1.

The control unit 170 monitors whether or not a reception number has been notified from the customer guidance device 20 (S401). When a reception number has been notified (S401: YES), the control unit 170 determines whether or not there is waiting for dispensing of cash (S402). When there is no waiting for dispensing (S402: NO), the control unit 170 causes the display unit 610 of the display device 600 to display the notified reception number as shown in FIG. 12 (S403). Meanwhile, when there is waiting for dispensing (S402: YES), the control unit 170 registers the notified reception number into a reception number file (not shown) prepared in the memory 180 (S404).

Furthermore, the control unit 170 monitors whether or not dispensing of cash according to the cash-out function has been completed (S405). While there is no notification of a reception number (S401: NO), if dispensing of cash is completed (S405: YES), the control unit 170 deletes, from the reception number file, the reception number of the completed dispensing (S406). Then, when the next reception number has been registered in the reception number file (S407: YES), the control unit 170 displays the next reception number (S408), and when the next reception number has not been registered (S407: NO), the control unit 170 causes the display unit 610 to be turned off (S409).

According to the configuration of the present modification, the customer can understand the position of the dispensing-target POS register device 10 by confirming the reception number displayed on the display unit 610. Furthermore, the customer can recognize that the customer's turn for dispensing has come, on the basis of the displayed reception number.

### <Modification 2>

In the present modification, similar to Modification 1 above, the POS register device 10 is provided with the display device 600 (see FIG. 9). In addition, in the present modification, the POS register device 10 displays, on the display unit 610 of the display device 600, cash-out availability information regarding whether or not dispensing of cash according to the cash-out function can be performed. In the POS register device 10, an availability information announcement process is executed by the control unit 170. It is noted that the control unit 170 corresponds to a "determination unit" in the claims. The display unit 610 corresponds to a "determination information output unit" described in the claims.

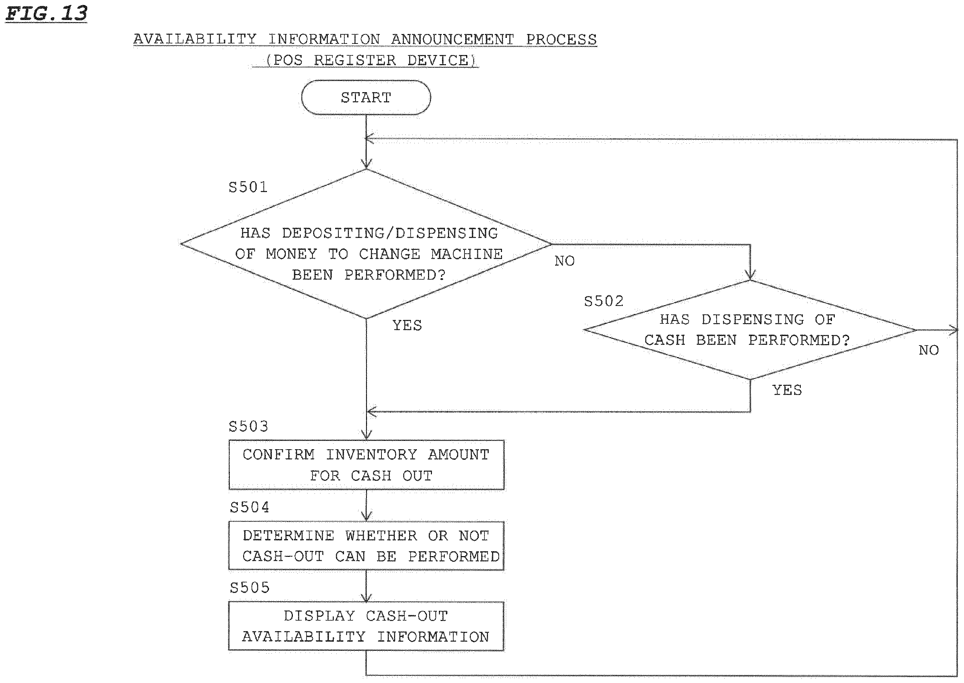

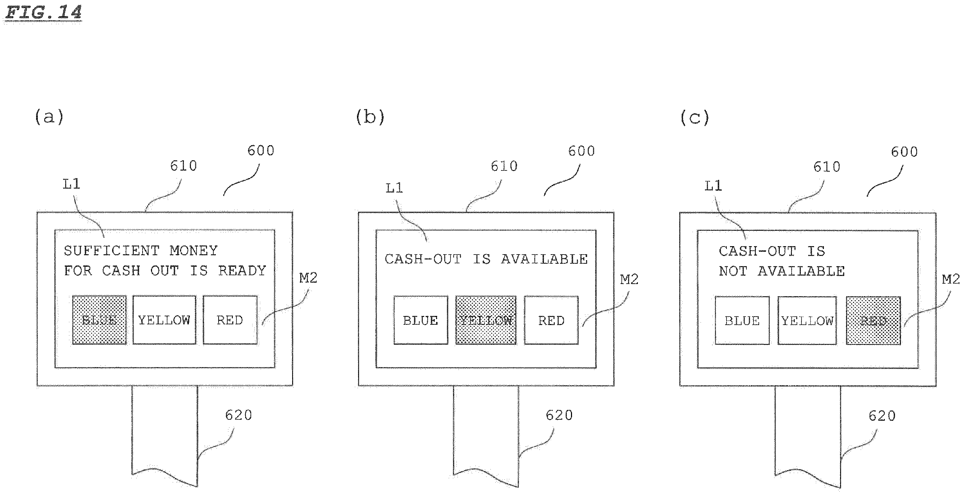

FIG. 13 is a flowchart showing the availability information announcement process according to Modification 2. FIGS. 14(a) to 14(c) each show the display device 600 in a state where the cash-out availability information is displayed, according to Modification 2.

The control unit 170 monitors whether or not depositing/dispensing of money to the change machine 200 has been performed, and whether or not dispensing of cash according to the cash-out function has been performed (S501, S502). When these transactions are performed, the inventory amount of cash for cash out could vary.

When depositing/dispensing of money to the change machine 200 has been performed or when dispensing of cash according to the cash-out function has been performed (S501: YES, S502: YES), the control unit 170 confirms the inventory amount of cash for cash out in the cash-out inventory amount file 181 (S503). Then, on the basis of the inventory amount of cash for cash out, the control unit 170 determines whether or not dispensing of cash according to the cash-out function can be performed (S504). For example, when there is an inventory amount of cash for cash out, the control unit 170 determines that dispensing can be performed. Alternatively, when banknotes of all of the denominations of 1,000 yen, 5,000 yen, and 10,000 yen are present as the inventory amount of cash for cash out, the control unit 170 may determine that dispensing can be performed. Furthermore, in the present embodiment, when dispensing can be performed, the control unit 170 determines the degree at which dispensing can be performed, on the basis of the inventory amount of cash for cash out.

As shown in FIGS. 14(a) to 14(c), in accordance with the determination result, the control unit 170 causes the display unit 610 of the display device 600 to display, as the cash-out availability information (information related to determination result), a lamp L1 in three colors and a message M2 indicating availability of dispensing and a degree at which dispensing can be performed (S505).

A configuration may be adopted in which the control unit 170 does not determine the degree at which dispensing can be performed. In this case, information (lamp, message) indicating whether or not dispensing can be performed is displayed on the display unit 610.

According to the present modification, the customer can confirm availability of the cash-out function in each POS register device 10. Therefore, the customer can go to a queue for a checkout counter where a POS register device 10 from which cash can be taken out according to the cash-out function is placed.

### <Modification 3>

In the above embodiment, a cash-out card is used for dispensing of cash according to the cash-out service. In the customer guidance device 20, the barcode provided to the cash-out card is read by the code reader, whereby the dispensing amount of money is acquired.

However, as in the present modification, a configuration may be adopted in which the customer can directly input a dispensing amount of money to the operation/display unit 510 of the customer guidance device 20. In this case, cash-out cards need not necessarily be used, or may be used. The operation/display unit 510 corresponds to an "acquisition unit" described in the claims.

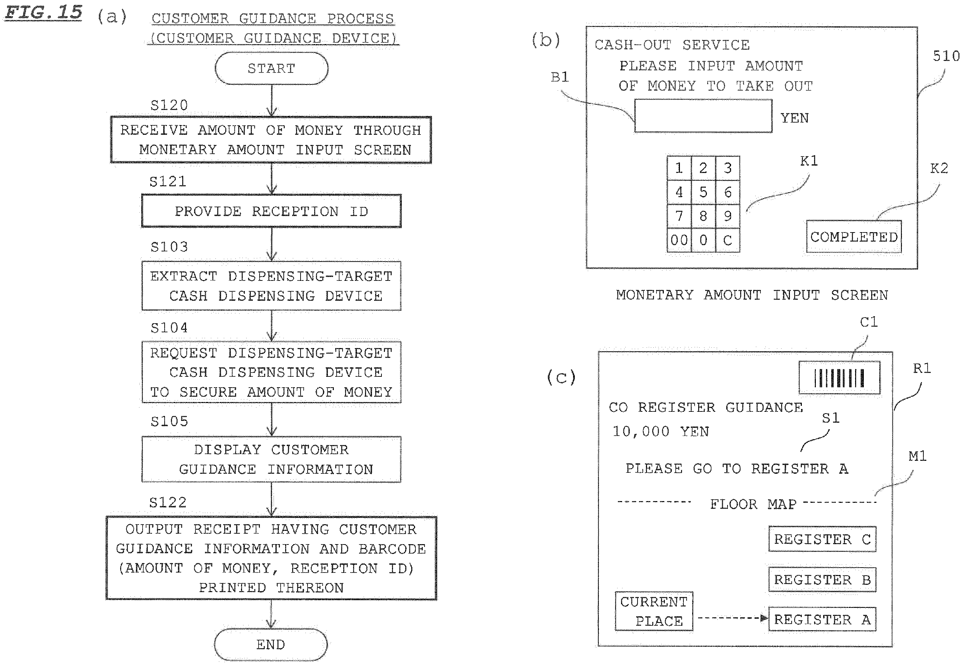

FIG. 15(a) is a flowchart showing a customer guidance process according to Modification 3. FIG. 15(b) shows the operation/display unit 510 in a state where a monetary amount input screen is displayed, according to Modification 3. FIG. 15(c) shows an example of a receipt R1 outputted by the printing unit 530, according to Modification 3. In the customer guidance process of the present modification shown in FIG. 15(a), the processes of S101, S102, and S106 of the customer guidance process of the above embodiment shown in FIG. 6(a) are replaced by the processes of S120 to S122.

In the present modification, the control unit 550 causes the operation/display unit 510 to display the monetary amount input screen, to receive an input of a dispensing amount of money by a customer (S120). As shown in FIG. 15(b), the monetary amount input screen includes an input box B1, numeric keys K1, and a completion key K2. The customer inputs an amount of money itself (a number indicating the amount of money) requested by the customer, to the input box B1 by using the numeric keys K1, and presses the completion key K2. Accordingly, the operation/display unit 510 receives the dispensing amount of money, and outputs the received dispensing amount of money to the control unit 550. Next, the control unit 550 provides the received dispensing amount of money with a reception ID for identifying the dispensing amount of money (S121). Thereafter, the control unit 550 extracts a dispensing-target POS register device 10 (S103), and requests the extracted POS register device 10 to secure the dispensing amount of money (S104). The request signal at this time includes the reception ID instead of a card ID. Furthermore, the control unit 550 causes the operation/display unit 510 to display customer guidance information (S105), and then, causes the printing unit 530 to output a receipt R1 having a barcode C1 as well as the customer guidance information (message S1, floor map M1) printed thereon, as shown in FIG. 15(c) (S122). The barcode C1 includes the dispensing amount of money and the reception ID.

When cash is to be dispensed at the POS register device 10, the barcode C1 provided to the receipt R1 is read by the code reader 140. In the cash securement process in FIG. 7 and the cash dispensing process in FIG. 8, the reception ID is used instead of the card ID.

In the above-described configuration, an amount of money itself (a number indicating the amount of money) is inputted to the input box B1. However, a denomination and the number of banknotes of the denomination may be inputted to the input box B1.

According to the present modification, the customer can directly input a desired amount of money to the customer guidance device 20. This eliminates the need to use a plurality of cash-out cards due to absence of a cash-out card corresponding to a desired amount of money, and eliminates the need to sequentially acquire dispensing amounts of money from all of those cash-out cards.

In the present modification, not only an amount of money may be directly inputted, but also the barcode of the cash-out card may be read.

### <Other modifications>

In the above embodiment, the customer guidance device 20 performs both of displaying customer guidance information using the operation/display unit 510, and outputting, using the printing unit 530, a receipt R1 having the customer guidance information printed thereon. However, the customer guidance device 20 may perform only one of displaying the customer guidance information using the operation/display unit 510, and outputting, using the printing unit 530, the receipt R1 having the customer guidance information printed thereon.

In the above embodiment, when there are a plurality of POS register devices 10 that can perform dispensing of cash corresponding to the dispensing amount of money requested by the customer, a POS register device 10 as the dispensing target is extracted on the basis of a predetermined priority. However, when there are a plurality of POS register devices 10 that can perform dispensing of cash corresponding to the dispensing amount of money requested by the customer, the customer may select a desired POS register device 10, whereby the selected POS register device 10 may be extracted as the dispensing target.

Furthermore, in the above embodiment, in S103 of the customer guidance process, the control unit 550 accesses the cash-out inventory amount DB 31 of the store management server 30, and extracts a dispensing-target POS register device 10 on the basis of the dispensing amount of money and the inventory amount of cash for cash out stored in the cash-out inventory amount DB 31. However, the control unit 550 may access the cash-out inventory amount file 181 of each POS register device 10 via the control unit 170, and extract a dispensing-target POS register device 10 on the basis of the dispensing amount of money and the inventory amount of cash for cash out stored in the cash-out inventory amount file 181.

Furthermore, in the above embodiment, cash corresponding to the dispensing amount of money is secured in the dispensing-target POS register device 10. However, a configuration may be adopted in which cash corresponding to the dispensing amount of money is not secured in the dispensing-target POS register device 10. In this case, in the customer guidance device 20, when there are a plurality of POS register devices 10 that can perform dispensing of cash corresponding to the dispensing amount of money, the plurality of POS register devices 10 are extracted as the dispensing targets, and customer guidance information for guiding the customer to the POS register devices 10 is displayed on the operation/display unit 510 and the receipt R1.

Further, in the above embodiment, in the customer guidance device 20, as the guidance control performed by the control unit 550, customer guidance information is displayed on the operation/display unit 510 and the receipt R1. However, for example, the control unit 550 may perform, as the guidance control, control in which audio that makes a notification of the position (location) of the POS register device 10 to serve as the dispensing target is outputted from an audio output unit such as a speaker. Alternatively, the control unit 550 may perform, as the guidance control, control in which an instruction (information) for operating an announcement device (announcement unit) such as a rotary indication light provided to the POS register device 10 to serve as the dispensing target is transmitted to the POS register device 10.

Furthermore, in the above Modification 1, both of the customer guidance information and the reception number are displayed on the operation/display unit 510 and the receipt R1. However, a configuration may be adopted in which only the reception number is displayed on the operation/display unit 510 and the receipt R1.

Furthermore, in the above embodiment, when a plurality of cash-out cards are used because of the dispensing amount of money wished by the customer, the customer brings the plurality of cash-out cards to a checkout counter where a POS register device 10 is installed. However, the following configuration may be adopted. That is, when the customer guidance device 20 has read a plurality of cash-out cards, a barcode obtained by coding the total dispensing amount of money of the plurality of cash-out cards and the card IDs of the plurality of cash-out cards is printed on the receipt R1 outputted from the customer guidance device 20. In this case, when the customer brings the receipt R1 to a checkout counter, a clerk serving as an operator of the POS register device 10 only needs to read the barcode of the receipt R1 using the code reader 140, without reading barcodes of the plurality of cash-out cards using the code reader 140. Accordingly, reading time can be shortened. Furthermore, at the POS register device 10, the operator may confirm the receipt R1 and manually input the dispensing amount of money.

In the above embodiment, cash out is performed on the basis of debit settlement which is card settlement using a debit card. However, cash out may be performed on the basis of card settlement using another payment card, for example, a credit card.

In the above embodiment, in the change machine 200, depositing/dispensing of cash (money) is automatically performed. However, the change machine 200 may be provided with a drawer that stores cash (money), and an operator such as a clerk may manually perform depositing/dispensing of cash into/out of the drawer.

Furthermore, the store may set a fee for cash out, in accordance with the dispensing amount of money for cash out. In this case, the total amount of money of the dispensing amount of money and the fee for cash out is the amount of money subjected to card settlement for cash out. In this case, when the customer guidance device 20 has read the dispensing amount of money for cash out from a cash-out card or the like, the fee may be displayed on the operation/display unit 510 or the receipt R1.

In the above embodiment, card settlement using a debit card is performed with respect to the dispensing amount of money for cash out and the commodity price. However, electronic settlement other than card settlement may be performed. For example, as an example of another type of electronic settlement, settlement may be performed such that a code such as a two-dimensional code associated with an account is displayed on a mobile terminal such as a smartphone, and this code is read. Similarly, as an example of another type of electronic settlement, settlement may be performed such that identification information for which biometric identification is performed is associated with an account, and biometric identification is performed for the customer. In this case, without using a debit card, the customer can perform settlement only by inputting biometric information to a terminal with which electronic settlement is performed. Alternatively, biometric information may be stored in a debit card, and a user who performs electronic settlement may be biometrically identified by using the biometric information.

In the above embodiment, a POS register device 10 has been described as an example of a cash dispensing device forming a cash dispensing system of the present invention. However, the cash dispensing device may be an automatic settlement machine that is installed in, for example, a hotel, a hospital, a golf course, or the like, and performs automatic settlement of a price through operation by the customer. The cash dispensing device can be applied to a so-called semi-self register device for which a clerk reads a barcode attached to a commodity using a barcode reader, and a customer pays the price through a pay-only register device (change machine). The cash dispensing device can also be applied to a so-called self register device for which a customer reads a barcode attached to a commodity using a barcode reader and pays the price through a pay-only register device (change machine). In the case of a semi-self register, as a method for acquiring a dispensing amount of money for cash out, a clerk may, when reading a barcode of a commodity or independently from reading of a barcode of a commodity, input a dispensing amount of money (read a barcode of a cash-out card or directly input an amount of money), or alternatively, a customer may input a dispensing amount of money using an operation unit of a pay-only register device (change machine).

Other than the above, the embodiment of the present invention can be modified as appropriate within the scope of the claims. The constituent elements illustrated in the drawings are conceptually functional constituent elements, and thus may not necessarily be configured as physical constituent elements, as illustrated in the drawings. That is, distributed or integrated forms of each device are not limited to the forms illustrated in the drawings, and all or some of the forms may be distributed or integrated functionally or physically in any unit depending on various loads, use statuses, or the like.

### DESCRIPTION OF THE REFERENCE CHARACTERS

- 1: cash dispensing system
- 10: POS register device (cash dispensing device)
- 170: control unit (determination unit)
- 20: customer guidance device
- 510: operation/display unit (information output unit, acquisition unit)
- 520: code reader (acquisition unit)
- 530: printing unit (information output unit)
- 540: communication unit
- 550: control unit
- 610: display unit (announcement unit, determination information output unit)
- R1: receipt (printed medium)

## Claims

1. A customer guidance device configured to guide a customer to a cash dispensing device configured to dispense cash, the customer guidance device comprising:
an acquisition unit configured to acquire a dispensing amount of money of which dispensing is requested by the customer; and
a control unit, wherein
the control unit
extracts, on the basis of the dispensing amount of money acquired by the acquisition unit, the cash dispensing device from which cash corresponding to the dispensing amount of money is to be dispensed, from cash dispensing devices, and
performs control for guiding the customer to the extracted cash dispensing device.

2. The customer guidance device according to claim 1, wherein
the cash dispensing device has a cash checkout function of performing cash settlement for an amount of money of cash paid by a customer and of dispensing change, and a cash-out function of dispensing cash corresponding to an amount of money withdrawn from a deposit account in a financial institution on the basis of electronic settlement for the amount of money of which dispensing is requested by a customer.

3. The customer guidance device according to claim 2, wherein
the control unit extracts the cash dispensing device on the basis of an inventory amount of cash prepared in the cash dispensing device for the cash-out function, and the dispensing amount of money acquired by the acquisition unit.

4. The customer guidance device according to claim 2 or 3, further comprising
a communication unit configured to communicate with the cash dispensing device, wherein
the control unit transmits the dispensing amount of money acquired by the acquisition unit to the extracted cash dispensing device through the communication unit, so that the extracted cash dispensing device secures cash corresponding to the dispensing amount of money so as not to be used until the cash is dispensed.

5. The customer guidance device according to any one of claims 1 to 4, wherein
the acquisition unit acquires the dispensing amount of money by reading a code including the dispensing amount of money.

6. The customer guidance device according to any one of claims 1 to 5, wherein
the acquisition unit acquires the dispensing amount of money by receiving an input operation of an amount of money or a denomination and a quantity thereof.

7. The customer guidance device according to any one of claims 1 to 6, further comprising
an information output unit, wherein
as the control for guiding the customer, the control unit causes the information output unit to output specification information for specifying the extracted cash dispensing device.

8. The customer guidance device according to claim 7, wherein
the information output unit includes a printing unit, and
the control unit causes the printing unit to output a printed medium having the specification information printed thereon.

9. A cash dispensing system comprising a plurality of cash dispensing devices each configured to dispense cash, and a customer guidance device configured to guide a customer to any of the cash dispensing devices, wherein
the customer guidance device includes:
an acquisition unit configured to acquire a dispensing amount of money of which dispensing is requested by the customer; and
a control unit, and
the control unit
extracts, on the basis of the dispensing amount of money acquired by the acquisition unit, the cash dispensing device from which cash corresponding to the dispensing amount of money is to be dispensed, from the cash dispensing devices, and
performs control for guiding the customer to the extracted cash dispensing device.

10. The cash dispensing system according to claim 9, wherein
each cash dispensing device has a cash checkout function of performing cash settlement for an amount of money of cash paid by a customer and of dispensing change, and a cash-out function of performing electronic settlement for an amount of money of which dispensing is requested by a customer, and of dispensing cash corresponding to the amount of money withdrawn from a deposit account in a financial institution on the basis of the electronic settlement,
the customer guidance device further comprises a communication unit configured to communicate with the cash dispensing device,
the control unit transmits the dispensing amount of money acquired by the acquisition unit to the extracted cash dispensing device through the communication unit, and
when the cash dispensing device has received the dispensing amount of money, the cash dispensing device secures cash corresponding to the dispensing amount of money so as not to be used until the cash is dispensed.

11. The cash dispensing system according to claim 9 or 10, wherein
corresponding to each of the cash dispensing devices, an announcement unit configured to announce that the cash dispensing device is the extracted cash dispensing device is provided, and
as the control for guiding the customer, the control unit outputs information for causing the announcement unit corresponding to the extracted cash dispensing device to perform an announcement operation.

12. The cash dispensing system according to any one of claims 9 to 11, comprising:
a determination unit configured to determine whether or not dispensing of cash can be performed, on the basis of an inventory amount of cash prepared in the cash dispensing device for the cash-out function; and
a determination information output unit configured to output information related to a determination result by the determination unit.

13. A customer guidance method for guiding a customer to a cash dispensing device configured to dispense cash, the customer guidance method comprising:
acquiring a dispensing amount of money of which dispensing is requested by the customer;
extracting, on the basis of the acquired dispensing amount of money, the cash dispensing device from which cash corresponding to the dispensing amount of money is to be dispensed, from cash dispensing devices; and
performing control for guiding the customer to the extracted cash dispensing device.

14. A program configured to cause a computer, of a customer guidance device configured to guide a customer to a cash dispensing device configured to dispense cash, to execute the functions of:
acquiring a dispensing amount of money of which dispensing is requested by the customer;
extracting, on the basis of the acquired dispensing amount of money, the cash dispensing device from which cash corresponding to the dispensing amount of money is to be dispensed, from cash dispensing devices; and
performing control for guiding the customer to the extracted cash dispensing device.
